# FASCICULE DE BREVET EUROPEEN

(11) **EP 3 532 348 B1**
(45) Date de publication et mention de la délivrance du brevet: **30.09.2020**
(21) Numéro de dépôt: 17794272.9
(22) Date de dépôt: 20.10.2017
(51) Int. Cl.: B60S 1/38

(54) **DISPOSITIF D'ESSUYAGE POUR VITRE DE VEHICULE AUTOMOBILE COMPRENANT UN BALAI D'ESSUIE-GLACE ET UN FILM PIEZO-ELECTRIQUE**
WISCHVORRICHTUNG FÜR KRAFTFAHRZEUGSCHEIBEN MIT EINEM SCHEIBENWISCHERRAHMEN UND EINER PIEZOELEKTRISCHEN FOLIE
WIPING DEVICE FOR MOTOR VEHICLE WINDOWS, COMPRISING A WINDSCREEN WIPER FRAME AND A PIEZOELECTRIC FILM

(30) Priorité: 25.10.2016 FR 1660334
(43) Date de publication de la demande: 04.09.2019
(73) Titulaire: Valeo Systèmes d'Essuyage, 78322 Le Mesnil Saint Denis (FR)
(72) Inventeur: CAILLOT, Gérald, 78322 Le Mesnil Saint Denis (FR); IZABEL, Vincent, 78322 Le Mesnil Saint Denis (FR); JARASSON, Jean-Michel, 78322 Le Mesnil Saint Denis (FR)
(74) Mandataire: Valeo Vision
(86) Numéro de dépôt international: PCT/EP2017/076900
(87) Numéro de publication internationale: WO 2018/077757

(56) Documents cités:
- EP-A1- 1 600 428
- WO-A1-2015/132049
- GB-A- 2 106 966
- JP-A- 2015 189 273

## Description

### DOMAINE TECHNIQUE DE L'INVENTION

L'invention concerne un dispositif d'essuyage pour vitre de véhicule automobile.

### ARRIERE-PLAN TECHNIQUE DE L'INVENTION

La piézo-électricité consiste en une transformation d'un champ de pression mécanique en une énergie électrique. Il est connu d'utiliser les propriétés piézo-électriques de certains matériaux pour alimenter en énergie électrique des équipements automobiles tels que des balais d'essuie-glace de véhicule automobile ou des équipements de ces balais d'essuie-glace appartenant à un dispositif d'essuyage d'une vitre du véhicule automobile.

Pour ce faire, on connaît par exemple l'utilisation de blocs piézo-électriques qui sont agencés sur la lame d'essuyage d'un balai d'essuie-glace et qui sont conçus pour se déformer notamment lors des changements d'orientation de la lame d'essuyage qui interviennent à chaque changement de direction de balayage dans le mouvement de va-et-vient du balai d'essuie-glace. L'électricité créée par la déformation des blocs piézo-électriques est alors utilisée pour alimenter en courant électrique un équipement du véhicule automobile.

Le document JP 2015 189273 A1 montre un dispositif d'essuyage pour vitre de véhicule automobile selon le préambule de la première revendication.

Cependant, les blocs piézo-électriques doivent être agencés à un endroit où ils peuvent être soumis à un champ de pression mécanique suffisamment intense pour que les blocs soient déformés. Ces contraintes d'agencement limitent la capacité des éléments piézo-électriques à produire de l'électricité.

Il existe donc un besoin de proposer une alternative aux dispositifs existant notamment afin de pouvoir bénéficier de plus de souplesse dans l'alimentation en énergie électrique par des éléments dits « piézo-électriques ». L'un des objectifs de l'invention est de répondre à ce besoin.

### BREF RESUME DE L'INVENTION

Dans ce but, l'invention propose un dispositif d'essuyage pour vitre de véhicule automobile comprenant un balai d'essuie-glace et un film piézo-électrique, le film piézo-électrique étant monté sur le balai d'essuie-glace de manière à produire un courant électrique.

Le positionnement de l'élément piézo-électrique sous la forme d'un film piézo-électrique au niveau du balai d'essuie-glace permet de profiter de l'emplacement et du fonctionnement du dispositif d'essuyage pour produire de l'électricité.

Selon différents aspects de l'invention, qui pourront être pris ensemble ou séparément :
- le balai d'essuie-glace comprend une lame d'essuyage conçue pour être en contact avec la vitre et en épouser localement la forme,
- le film piézo-électrique est agencé sur le balai d'essuie-glace de manière à se déformer avec la lame d'essuyage et à produire du courant électrique lors d'un déplacement du balai d'essuie-glace sur la vitre,
- le film piézo-électrique est conçu pour se déformer sous l'effet des vibrations et/ou de secousses créées par le fonctionnement du véhicule,
- le film piézo-électrique est conçu pour se déformer sous l'effet d'un flux d'air circulant autour du véhicule automobile,
- le dispositif d'essuyage comprend en outre un dispositif d'accumulation d'énergie électrique, notamment un condensateur, un super-condensateur ou une batterie, conçu pour être alimenté en courant électrique par le film piézo-électrique,
- le dispositif d'essuyage comprend en outre un dispositif de réglage mécanique conçu pour modifier une pression de contact entre le pare-brise et le balai d'essuie-glace en fonction du courant électrique créé par le film piézo-électrique,
- le dispositif d'essuyage comprend un module de chauffage, notamment un film chauffant, conçu pour être alimenté en courant électrique par le film piézo-électrique.

L'invention concerne encore un procédé d'avertissement pour un tel dispositif d'essuyage comprenant les étapes suivantes :
- analyse du courant électrique produit par le film piézo-électrique,
- comptage du nombre d'aller-retour du balai d'essuie-glace,
- création d'un signal d'avertissement, notamment sonore et/ou lumineux, lorsque le nombre d'aller-retour atteint une valeur seuil.

L'invention concerne encore un procédé de contrôle d'arrosage pour un tel dispositif d'essuyage, le dispositif d'essuyage comprenant en outre un module d'arrosage conçu pour permettre alternativement et/ou cumulativement un premier mode d'arrosage de la vitre et un deuxième mode d'arrosage de la vitre, le procédé comprenant les étapes suivantes :
- analyse du courant électrique produit par le film piézo-électrique,
- détection d'un changement de direction du balai d'essuie-glace,
- déclenchement et/ou arrêt de l'un au moins des premier et deuxième modes d'arrosage.

Selon un aspect de l'invention, le module d'arrosage est une électrovanne à deux voies montée sur le balai d'essuie-glace.

### BREVE DESCRIPTION DES FIGURES

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins annexés dans lesquels:
- La figure la est une vue schématique d'un pare-brise d'un véhicule automobile sur laquelle a été représenté un exemple de variations de galbe d'une vitre parcourue par un balai d'essuie-glace d'un dispositif d'essuyage selon l'invention.
- La figure 1b est une vue schématique d'un pare-brise d'un véhicule automobile sur laquelle a été représenté un exemple de variations de galbe d'une vitre au niveau d'une partie parcourue par deux balais d'essuie-glace d'un dispositif d'essuyage selon un autre mode de réalisation, conforme à l'invention.
- La figure 1c est une vue de face de la partie arrière d'un véhicule automobile muni d'un dispositif d'essuyage selon l'invention.
- La figure 2 est une vue en section transversale d'un balai d'essuie-glace conforme à l'invention selon un premier mode de réalisation.
- La figure 2a est une vue éclatée, en perspective, d'une partie du balai d'essuyage illustré à la figure 2.
- La figure 3 est une vue en section transversale d'un balai d'essuie-glace conforme à l'invention, dans un mode de réalisation différent.
- La figure 3a est une vue éclatée, en perspective, d'une partie d'un balai d'essuie-glace conforme à l'invention, dans un autre mode de réalisation.
- La figure 4 est une vue en section transversale d'un balai d'essuie-glace conforme à l'invention , selon un encore autre mode de réalisation, se déplaçant contre une vitre à essuyer selon un sens descendant.
- La figure 5 est une vue en section transversale du balai d'essuie-glace illustré à la figure 4 se déplaçant dans un sens ascendant.
- La figure 6 est un graphique représentant des modes de fonctionnement d'un module de comptage en fonction du nombre de cycles d'essuyages réalisés par le dispositif d'essuyage.

Dans la suite, la description, purement illustrative et non limitative, est organisée en différentes parties débutant par un titre. Chacune de ces parties décrit un aspect et/ou un mode de réalisation possible de l'invention.

Comme illustré aux figures la à 1c, l'invention concerne un dispositif d'essuyage 1 notamment pour une vitre d'un véhicule automobile. Le dispositif d'essuyage comprend un balai d'essuie-glace 10 et un film piézo-électrique 2.

### DISPOSITIF D'ESSUYAGE

Le dispositif d'essuyage 1 est un dispositif conçu pour améliorer la visibilité d'un conducteur du véhicule automobile à travers la vitre 30 du véhicule automobile. La vitre 30 du véhicule automobile est par exemple un pare-brise avant, une vitre arrière du véhicule automobile ou encore une surface extérieure d'un rétroviseur automobile ou d'un phare du véhicule automobile. Ici, la vitre 30est une vitre arrière 30 du véhicule automobile.

### BRAS D'ESSUYAGE

Le dispositif d'essuyage 1 comprend de plus un bras 20 de balai d'essuie-glace et un moteur 8. Le moteur 8 est ici conçu pour entrainer le bras 20 dans un mouvement angulaire de va-et-vient. Le bras 20, lui, est conçu pour entraîner le balai d'essuie-glace 10 dans le mouvement de va-et-vient. Le balai d'essuie-glace 10 est ici monté au bras 20 dans un prolongement du bras 20. Le balai d'essuie-glace 10 est conçu pour évoluer, selon le mouvement de va-et-vient, entre une position de repos P1 et une position de butée P2, de l'une à l'autre.

Le bras 20 comprend une extrémité proximale 21 et une extrémité distale 22. Il s'étend longitudinalement de l'une des extrémités 21, 22 à l'autre 21, 22. Le bras 20 est conçu pour être assemblé au niveau de son extrémité proximale 21 au moteur 8 du dispositif d'essuyage 1. Le bras 20 est par ailleurs conçu pour être assemblé au niveau de son extrémité distale 22 au balai d'essuie-glace 10 de manière à mettre en mouvement celui-ci.

Comme cela sera précisé par la suite, le balai d'essuie-glace 10 est conçu pour être en contact avec la vitre 30 du véhicule automobile. En particulier, le balai d'essuie-glace 10 est conçu pour être en contact avec une surface extérieure de la vitre arrière 30.

### BALAI D'ESSUIE-GLACE

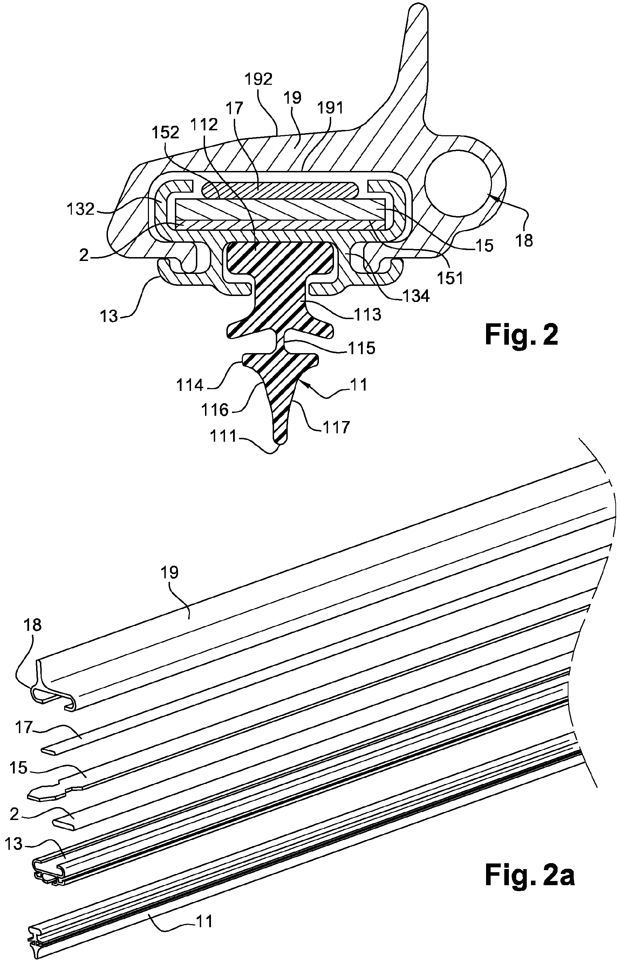

Comme illustré aux figures 2 et 2a, le balai d'essuie-glace 10 comprend une lame d'essuyage 11, une armature 13 et au moins une vertèbre 15. L'armature 13 peut aussi être désignée par le terme anglais « *holder* » et la vertèbre 15 par le terme anglais « *spline* ».

### ARMATURE

Comme illustré notamment à la figure 2, l'armature 13 comprend une première extrémité longitudinale et une deuxième extrémité longitudinale. L'armature 13 s'étend longitudinalement selon une direction principale d'extension longitudinale de sa première extrémité longitudinale à sa deuxième extrémité longitudinale. L'armature 13 présente de plus une hauteur, mesurée orthogonalement à la direction principale d'extension longitudinale de l'armature 13.

L'armature 13 comprend une première cavité longitudinale 132, dite cavité supérieure, et une deuxième cavité longitudinale 134, dite cavité inférieure. Les deux cavités 132, 134 s'étendent ici longitudinalement de la première à la deuxième extrémité de l'armature 13. Les cavités supérieure 132 et inférieure 134 sont conçues pour servir de logement respectivement à la vertèbre 15 et à la lame d'essuyage 11. Ainsi, l'armature 13 fait fonction de support à la vertèbre 15 ainsi qu'à la lame d'essuyage 11.

La vertèbre 15 est logée dans la cavité supérieure 132 de l'armature 13. La lame d'essuyage 11 est en partie logée à l'intérieur de la cavité inférieure 134 de l'armature 13.

L'armature 13 est conçue de sorte que, une fois le dispositif d'essuyage 1 monté sur le véhicule automobile, l'armature 13 s'étend dans le sens de la hauteur dans une direction sensiblement orthogonale à la surface extérieure de la vitre arrière 30 du véhicule automobile.

### LAME D'ESSUYAGE

La lame d'essuyage 11 est conçue pour essuyer une partie, ou zone, de la surface extérieure de la vitre arrière 30 lorsque le balai d'essuie-glace 10 se déplace en va-et-vient le long de la vitre arrière 30.

La lame d'essuyage 11 est essentiellement conçue pour évacuer des liquides présents sur la surface extérieure de la vitre 30 et/ou pour nettoyer celui-ci. Le mouvement de va-et-vient du balai d'essuie-glace 10 permet en outre de débarrasser la vitre 30 d'éventuelles saletés.

La lame d'essuyage 11 comprend ici une première extrémité longitudinale et une deuxième extrémité longitudinale. La lame d'essuyage 11 s'étend longitudinalement selon une direction principale d'extension longitudinale entre sa première extrémité longitudinale et sa deuxième extrémité longitudinale, de l'une à l'autre.

La lame d'essuyage 11 présente une hauteur mesurée selon une direction (X). La direction (X) est orthogonale à la direction principale d'extension longitudinale de la lame d'essuyage 11. On note que la lame d'essuyage 11 comprend une extrémité supérieure 112 et une extrémité inférieure 111 et s'étend en hauteur de l'une à l'autre.

On note encore que l'extrémité inférieure 111 de la lame d'essuyage 11 est confondue avec un bord libre 111 de la lame d'essuyage 11. L'extrémité inférieure 111 de la lame d'essuyage 11 est destinée à être en contact avec la vitre 30.

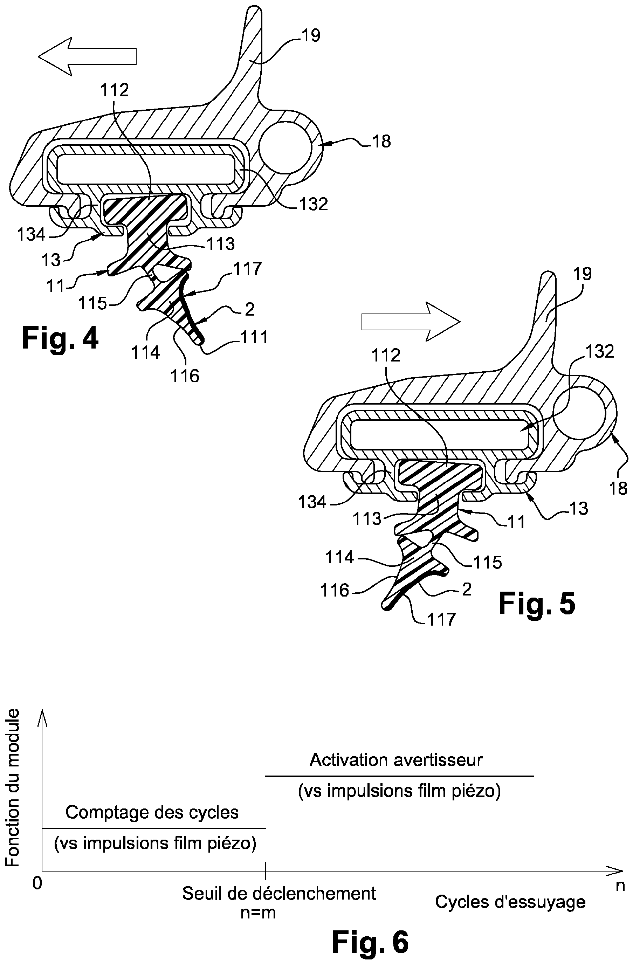

Comme cela est illustré en particulier aux figures 4 et 5, on note que la direction (X) n'est pas nécessairement rectiligne. Ici, en particulier, la direction (X) peut être courbe. Elle se déforme avec la lame d'essuyage 11 lors du déplacement du balai d'essuyage 10 comme cela sera expliqué par la suite.

La lame d'essuyage 11 comprend une partie supérieure 113 et une partie inférieure 114, solidaires l'une de l'autre. La partie supérieure 113 de la lame d'essuyage 11 est aussi appelée partie de fixation, partie de montage ou encore talon. La partie inférieure 114 de la lame d'essuyage 11 est, elle, appelée partie d'essuyage.

Les parties supérieure 113 et inférieure 114 sont reliées l'une à l'autre par une zone intermédiaire formant charnière 115 qui s'étend longitudinalement de la première extrémité longitudinale à la deuxième extrémité longitudinale de la lame d'essuyage 11. Comme illustré en particulier aux figures 4 et 5, la zone charnière 115 permet une déformation et un changement d'orientation de la lame d'essuyage 11 de sorte que la partie inférieure 114 peut pivoter autour de la partie supérieure 113 de la lame d'essuyage 11, et ce autour de la zone charnière 115 qui constitue l'axe longitudinal de pivotement de la partie inférieure 114. Ce mouvement de pivotement angulaire de la partie inférieure 114 par rapport à la partie supérieure 113 se produit notamment lors d'un changement de direction dans le mouvement de va-et-vient du balai d'essuie-glace 10 le long de la surface extérieure de la vitre arrière 30.

On note que la partie inférieure 114 de la lame d'essuyage 11 comprend le bord libre 111. La partie supérieure 113 comprend, elle, l'extrémité supérieure 112 de la lame d'essuyage 11.

La partie inférieure 114 de la lame d'essuyage 11 est conçue de manière à être en contact avec la surface extérieure de la vitre 30 notamment par le biais de son bord libre 111.

Comme illustré à la figure 2, la partie inférieure 114 de la lame d'essuyage 11 comprend une première face latérale 116 et une deuxième face latérale 117. Les première et deuxième faces latérales 116, 117 s'étendent chacune longitudinalement selon la direction principale d'extension longitudinale de la lame d'essuyage 11. On note que les première et deuxième faces latérales 116, 117 s'étendent longitudinalement de la première à la deuxième extrémité longitudinale de la lame d'essuyage 11.

Comme illustré notamment à la figure 2, les faces latérales 116, 117 s'étendent chacune sensiblement du bord libre 111 à la zone charnière 115.

Les première et deuxième faces latérales 116, 117 sont sensiblement opposées l'une à l'autre. Autrement dit, les faces latérales 116, 117 sont agencées de part et d'autre de la lame d'essuyage 11. Plus particulièrement, les faces latérales 116, 117 sont agencées de part et d'autre du bord inférieur 111 de la lame d'essuyage 11 et le long de celui-ci.

La première face latérale 116 de la lame d'essuyage 11 est agencée sur un côté de la lame d'essuyage 11 qui est sensiblement orienté vers la position P1 lorsque le dispositif d'essuyage est monté au véhicule automobile. La deuxième face latérale 117 est, elle, agencée sur un côté de la lame d'essuyage 11 qui est sensiblement orienté vers la position P2 lorsque le dispositif d'essuyage est monté au véhicule automobile.

Comme illustré à la figure 5, lorsque le balai d'essuie-glace 10 se déplace de la position P1 à la position P2, c'est-à-dire dans un sens montant, la partie inférieure 114 de la lame d'essuyage 11 est inclinée par rapport à la partie supérieure 113 de la lame d'essuyage 11. En particulier, la deuxième face latérale 117 est alors sensiblement en vis-à-vis avec la vitre 30.

De plus, lorsque le balai d'essuie-glace 10 se déplace de la position P1 à la position P2, la deuxième face latérale 117 de la lame d'essuyage 11 est étirée sensiblement selon une direction orthogonale à la direction principale d'extension longitudinale de la lame d'essuyage 11. La première face latérale 116, elle, est comprimée sensiblement selon une direction orthogonale à la direction principale d'extension longitudinale de la lame d'essuyage 11.

Comme illustré à la figure 4, lorsque le balai d'essuie-glace 10 se déplace de la position P2 à la position P1, c'est-à-dire dans un sens descendant, la partie inférieure 114 de la lame d'essuyage 11 est inclinée par rapport à la partie supérieure 113 de la lame d'essuyage 11. En particulier, la première face latérale 116 est alors sensiblement en vis-à-vis avec la vitre 30.

De plus, lorsque le balai d'essuie-glace 10 se déplace de la position P2 à la position P1, la première face latérale 116 de la lame d'essuyage 11 est étirée sensiblement selon une direction orthogonale à la direction principale d'extension longitudinale de la lame d'essuyage 11. La deuxième face latérale 117, elle, est comprimée sensiblement selon une direction orthogonale à la direction principale d'extension longitudinale de la lame d'essuyage 11.

La partie supérieure 113 de la lame d'essuyage 11 est conçue pour être montée, au moins partiellement, à l'intérieur de la cavité inférieure 134 de l'armature 11.

La lame d'essuyage 11 est conçue pour être en contact direct avec la surface extérieure de la vitre 30 du véhicule automobile. Elle est réalisée en un matériau souple tel par exemple du caoutchouc naturel ou synthétique. Le contact entre la lame d'essuyage 11 et la vitre 30 définit une zone de contact. Ici, la zone de contact est sensiblement linéaire et longitudinale. De plus, la zone de contact est ici dépourvue de discontinuité le long de la lame d'essuyage 11, ce qui permet un essuyage homogène de la vitre 30.

Le balai d'essuie-glace 10 est conçu de sorte que la lame d'essuyage 11 se déforme lors du déplacement du balai d'essuie-glace 10 le long de la vitre arrière 30. Cette déformation permet à la lame d'essuyage 11 d'épouser localement une courbe, ou galbe, de la vitre 30. Cette déformation de la lame d'essuyage 11 permet d'obtenir que la zone de contact entre la lame d'essuyage 11 et la vitre 30 soit continue comme évoqué plus haut.

### VERTEBRE

La vertèbre 15 du balai d'essuie-glace 10 permet de conférer à la lame d'essuyage 11 une rigidité suffisante pour la maintenir plaquée contre la surface extérieure de la vitre 30. La vertèbre 15 du balai d'essuie-glace 10 est conçue pour maintenir une pression de contact nécessaire et suffisante entre le bord libre 111 de la lame d'essuyage 11 et la surface extérieure de la vitre 30. La vertèbre 15 permet d'assurer un essuyage efficace en permettant ainsi à la zone de contact entre la lame d'essuyage 11 et la surface extérieure de la vitre 30 d'être et de rester continue lors du déplacement du balai d'essuie-glace 10 le long de la surface extérieure de la vitre 30.

La vertèbre 15 est ici une bande de matière. Elle comprend une première extrémité longitudinale et une deuxième extrémité longitudinale. La vertèbre 15 s'étend longitudinalement selon une direction principale d'extension longitudinale entre sa première extrémité longitudinale et sa deuxième extrémité longitudinale. La vertèbre 15 présente une hauteur, dite aussi épaisseur, mesurée perpendiculairement à sa direction principale d'extension longitudinale. Une fois les différents composants du dispositif d'essuyage 1 assemblés, la vertèbre 15 est agencée dans l'armature 13 de sorte que la direction de l'épaisseur de la vertèbre 15 est sensiblement orthogonale à la surface extérieure de la vitre 30 du véhicule automobile.

La vertèbre 15 comprend une face plane supérieure 152 et une face plane inférieure 151. La face inférieure 151 et la face supérieure 152 s'étendent parallèlement l'une à l'autre et délimitent l'épaisseur de la vertèbre 15.

Les directions principales d'extension longitudinales de l'armature 13, de la vertèbre 15 et de la lame d'essuyage 11 s'étendent sensiblement parallèlement les unes aux autres.

Comme illustré aux figures 2, 3, 4 et 5, le balai d'essuie-glace 10 peut en outre comprendre un conduit de distribution 18 conçu pour permettre la projection sur la vitre 30 d'un liquide, notamment un liquide de nettoyage, de rinçage ou de dégivrage. Le conduit de distribution 18 s'étend par exemple longitudinalement selon la direction principale d'extension longitudinale du balai d'essuie-glace 10. Le conduit de distribution 18 est par exemple muni d'orifices de projection, non représentés sur les figures. Les orifices de projection peuvent être régulièrement espacés le long du conduit de distribution 18. Les orifices de projection sont conçus pour permettre la projection du liquide depuis l'intérieur du conduit de distribution 18 vers la vitre 30.

Dans une variante non illustrée, le balai d'essuie-glace comprend par exemple deux conduits de distribution. Les conduits de distribution peuvent alors être agencés sensiblement de part et d'autre de la lame d'essuyage.

### FILM PIEZO-ELECTRIQUE

Le film piézo-électrique 2 est ici un film ou une fine bandelette de matière issue d'un matériau piézo-électrique. Le matériau piézo-électrique est conçu pour créer un courant électrique lorsqu'il est déformé et/ou soumis à un champ de pression mécanique. Le film piézo-électrique 2 s'étend longitudinalement d'une extrémité à l'autre de la vertèbre 15.

Comme illustré à la figure 2, le film piézo-électrique 2 est par exemple agencé dans l'une des cavités inférieure 134 ou supérieure 132 de l'armature 13. Ici, le film piézo-électrique 2 est agencé dans la cavité supérieure 132 sous la vertèbre 15.

Le film piézo-électrique 2 est agencé contre la vertèbre 15 du balai d'essuie-glace 10, en particulier en contact avec la face inférieure 151 de la vertèbre 15. Le film piézo-électrique 2 s'étend ici longitudinalement entre la première extrémité longitudinale et la deuxième extrémité longitudinale du balai d'essuie-glace 10.

### DEFORMATION DU FILM PIEZO-ELECTRIQUE

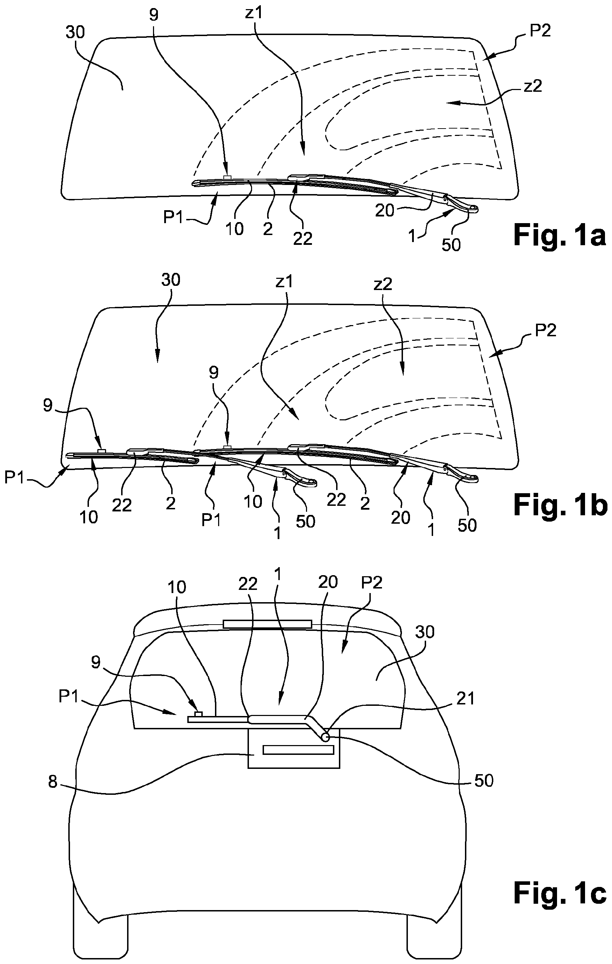

Comme illustrée à la figure 1a, la vitre 30 comprend notamment des zones z1 et z2 situées l'une derrière l'autre le long du trajet du balai d'essuie-glace 10 lorsque celui-ci se déplace entre les positions P1 et P2. Les zones z1 et z2 présentent ici des galbes différents. En particulier, la zone z1 présente un galbe moins important que la zone z2. Lorsque le balai d'essuie-glace 10 se déplace de la position P1 à la position P2, le balai d'essuie-glace 10 épouse alors successivement le galbe de la zone z1 puis le galbe de la zone z2, ce qui provoque la déformation du balai 10.

Ainsi, lors de son déplacement le long de la vitre 30 entre la position de repos P1 et la position de butée P2, le balai d'essuie-glace 10 et notamment la lame d'essuyage 11 subissent une déformation. Cette déformation correspond ici notamment à une déformation de la direction longitudinale de la lame d'essuyage 11. Cette déformation permet au balai d'essuie-glace 10, comme nous l'avons décrit, d'épouser la courbure de la surface extérieure de la vitre 30. Autrement dit, la déformation de la lame d'essuyage 11 lui permet d'épouser le galbe de la vitre 30.

Le film piézo-électrique 2 est conçu et agencé de manière à être déformé lors du mouvement du balai d'essuie-glace 10. En particulier, le film piézo-électrique 2 est conçu pour être déformé par la lame d'essuyage 11 et/ou par la vertèbre 15 du balai d'essuie-glace 10. Cette déformation du film piézo-électrique 2 génère alors de l'électricité.

Le courant électrique créé par le film piézo-électrique 2 est ici fonction de la position du balai d'essuie-glace 10 sur la vitre 30 et donc de la forme de la vitre 30 au niveau de la zone de contact entre la vitre 30 et la lame d'essuyage 11. Le courant électrique créé est aussi fonction du sens de déplacement du balai d'essuie-glace 10, c'est-à-dire selon que celui-ci se déplace de la position de repos P1 à la position de butée P2 ou inversement de la position de butée P2 à la position de repos P1.

En variante ou de manière cumulative, la déformation du film piézo-électrique 2 et la création d'un courant électrique sont provoquées par les vibrations et autres chocs dus au déplacement du véhicule automobile.

En variante ou cumulativement, un film piézo-électrique 2 peut être agencé sur l'une des première et deuxième faces latérales 116, 117 de la lame d'essuyage 11. En particulier, le film piézo-électrique 2 peut être par exemple collé sur l'une des première et deuxième faces latérales 116, 117. Le film piézo-électrique 2, ainsi agencé, subit alors sensiblement les mêmes déformations que la face latérale 116 ou 117 sur laquelle il est agencé.

En particulier, le film piézo-électrique 2 s'étend ici longitudinalement le long de la face latérale 116 ou 117. Le film piézo-électrique 2 est par exemple disposé de manière à recouvrir toute ou partie de la face latérale 116, 117 sur laquelle il est agencé.

Comme évoqué plus haut, le déplacement de la lame d'essuyage 11 sur et le long de la vitre 30 provoque des déformations des faces latérales 116, 117. En conséquence, le déplacement de la lame d'essuyage 11 sur et le long de la vitre 30 provoque des déformations du film piézo-électrique 2. Les déformations du film piézo-électrique 2 permettent alors la production d'un courant électrique.

On note que le frottement de la lame d'essuyage 11 contre la vitre 30 lors du déplacement du balai d'essuie-glace 10 permet la production d'un courant électrique par le film piézo-électrique 2.

Il est possible d'agencer un film piézo-électrique 2 sur chacune des faces latérales 116, 117 de la lame d'essuyage 11 de manière à augmenter la production de courant électrique lors du déplacement du balai d'essuie-glace 10.

### DISPOSITIF D'ACCUMULATION D'ENERGIE ELECTRIQUE

Le dispositif d'essuyage 1 peut comporter un dispositif d'accumulation d'énergie électrique, non illustré. Le dispositif d'accumulation d'énergie électrique est ici connecté au film piézo-électrique 2 et conçu pour être alimenté en énergie électrique par celui-ci. Autrement dit, le dispositif d'accumulation d'énergie électrique est conçu pour permettre un stockage de l'énergie créée par le film piézo-électrique 2. Le dispositif d'accumulation d'énergie électrique permet notamment de ne pas avoir à utiliser instantanément l'énergie électrique créée par le film piézo-électrique 2 lorsque cela n'est pas nécessaire et/ou lorsque cette énergie n'est pas immédiatement disponible, par exemple lorsque le véhicule et le dispositif d'essuyage sont à l'arrêt.

Le dispositif d'accumulation d'énergie électrique est par exemple un condensateur, un super-condensateur, une pile électrique ou encore une batterie d'accumulateurs. Il peut être agencé à proximité, voire à proximité immédiate du film piézo-électrique 2. Ici, en particulier, le dispositif d'accumulation d'énergie électrique est agencé dans l'une des cavités inférieure 134 ou supérieure 132 de l'armature 13.

### DISPOSITIF DE REGLAGE MECANIQUE ET MODULE DE CONTROLE

Ici, le dispositif d'essuyage 1 comprend en outre un dispositif de réglage mécanique 50 et un module de contrôle du dispositif de réglage mécanique 50.

Le dispositif de réglage mécanique 50 est un dispositif conçu pour modifier la pression de contact entre la lame d'essuyage 11 et la vitre 30. Le dispositif de réglage mécanique 50 est par exemple conçu de manière à faire varier un couple appliqué au bras 20 du dispositif d'essuyage 1. La variation du couple permet de faire varier la pression de contact entre le balai d'essuie-glace 10 et la vitre 30. Ici, le dispositif de réglage mécanique 50 peut comprendre à cet effet un ressort de torsion au niveau de l'extrémité proximale du bras 20 du dispositif d'essuyage.

Le dispositif de réglage mécanique 50 et le module de contrôle permettent d'éviter ou de modérer une diminution de la pression de contact susceptible de survenir lorsque le véhicule automobile se déplace à des vitesses élevées.

Le module de contrôle est conçu pour commander le dispositif de réglage mécanique 50 en fonction du courant créé par le film piézo-électrique 2. De cette manière, le module de contrôle permet par exemple de maintenir une pression de contact sensiblement constante entre le balai d'essuie-glace 10 et la vitre 30. Pour ce faire, le module de contrôle est connecté au film piézo-électrique 2. En effet, le courant électrique créé par le film piézo-électrique 2 est notamment fonction de la pression de contact entre le balai d'essuie-glace 10 et la vitre 30.

L'invention concerne encore un procédé d'ajustement de la pression de contact pour le dispositif d'essuyage 1 tel que décrit ci-avant et comprenant les étapes successives suivantes :
- analyse du courant électrique créé par le film piézo-électrique 2,
- détermination de la pression de contact entre la lame d'essuyage 11 et la vitre 30,
- comparaison de la pression de contact avec une valeur de référence prédéterminée,
- pilotage du dispositif de réglage mécanique 50 pour faire approcher la valeur de la pression de contact vers la valeur de référence.

### MODULE DE CHAUFFAGE

Le dispositif d'essuyage 1 peut comporter un module de chauffage 17. Le module de chauffage 17 est conçu pour être alimenté en énergie électrique par le film piézo-électrique 2. Le module de chauffage 17 est ici un film chauffant résistif 17.

Le film chauffant 17 est conçu pour être monté sur ou à l'intérieur du balai d'essuie-glace 10. Le film chauffant 17 est par exemple agencé à l'intérieur de l'une des deux cavités inférieure 134 et supérieure 132 de l'armature 13 du balai d'essuie-glace 10. Ici, le film chauffant 17 est agencé à l'intérieur de la cavité supérieure 132. En particulier, le film chauffant 17 est ici agencé sur et en contact avec la face plane supérieure 152 de la vertèbre 15.

Le film chauffant 17 est ici une fine bande de matière qui s'étend longitudinalement selon une direction principale d'extension longitudinale de la première extrémité à la deuxième extrémité du balai d'essuie-glace 10. Le film chauffant 17 se comporte comme une résistance électrique de chauffage pour produire de la chaleur lorsqu'il est traversé par le courant électrique produit par le film piézo-électrique 2.

### MODULE D'ARROSAGE

Le dispositif d'essuyage 1 comprend en outre un module d'arrosage, non illustré. Le module d'arrosage comprend ici une électrovanne. Par électrovanne, on entend une vanne commandée électriquement.

En particulier, ici, l'électrovanne est une électrovanne à deux voies. Elle est conçue pour être alimentée en énergie électrique grâce au courant électrique créé par le film piézo-électrique 2. L'électrovanne est ici montée sur le balai d'essuie-glace 10. En particulier, l'électrovanne est par exemple montée au niveau d'une jonction du bras 20 et du balai d'essuie-glace 10.

L'électrovanne est conçue ici pour permettre alternativement un premier arrosage ou un deuxième arrosage d'un liquide. Le liquide distribué peut être de l'eau, un liquide de nettoyage ou encore un liquide de dégivrage. En variante, l'électrovanne peut être conçue pour permettre simultanément les premier et deuxième arrosages.

Ici, le premier arrosage consiste en une projection du liquide dans une première direction. Le deuxième arrosage correspond lui à une projection du liquide dans une deuxième direction, notamment sensiblement opposée à la première direction.

Les première et deuxième directions d'arrosage sont sensiblement ici orthogonales à la direction principale d'extension longitudinale du balai d'essuie-glace. Autrement dit, les premier et deuxième arrosages consistent en des arrosages de part et d'autre du balai d'essuie-glace 10.

Le module d'arrosage est conçu pour permettre un arrosage dans le sens de déplacement du balai d'essuie-glace 10. Autrement dit, l'électrovanne est conçue pour autoriser l'un ou l'autre des arrosages en fonction du sens de déplacement du balai d'essuie-glace 10.

L'invention concerne aussi un procédé d'arrosage pour un dispositif d'essuyage 1 tel que décrit ci-dessus. Le procédé d'arrosage est conçu pour permettre un arrosage dans le sens de déplacement du balai d'essuie-glace 10. Le procédé d'arrosage comprend les étapes successives suivantes :
- analyse du courant électrique produit par le film piézo-électrique 2,
- détection d'un changement de direction du balai d'essuie-glace 10,
- déclenchement et/ou arrêt de l'un au moins des premier et deuxième arrosages.

La détection d'un changement de direction du balai d'essuie-glace 10 revient à détecter lorsque le balai d'essuie-glace 10 s'approche de l'une parmi les positions de butée P2 et de repos P1. Cette étape s'opère grâce à l'analyse du courant électrique créé par le film piézo-électrique 2. En effet, comme déjà évoqué, le courant électrique créé par le film piézo-électrique 2 dépend notamment de la position du balai d'essuie-glace 10 ainsi que du sens de déplacement du balai d'essuie-glace 10.

Ainsi, à chaque fois que le balai d'essuie-glace 10 s'approche de la position de butée P2, le film piézo-électrique 2 génère un même courant électrique. L'analyse et/ou la mesure du courant électrique créé par le film piézo-électrique 2 permet donc de détecter l'imminence d'un changement de direction de déplacement du balai d'essuie-glace 10. De même, l'analyse et/ou la mesure du courant électrique créé par le film piézo-électrique 2 permet de détecter lorsque le balai d'essuie-glace 10 s'approche de la position de repos P1.

En particulier, le film piézo-électrique 2 produit ici un premier courant de tension U₁ et d'intensité I₁ lorsque le balai d'essuie-glace 10 atteint la position de repos P1. Et, par ailleurs, le film piézo-électrique 2 produit un deuxième courant cette fois de tension U₂ et d'intensité I₂ lorsque le balai d'essuie-glace 10 atteint la position de butée P2.

Dans chaque cas, la mesure de l'un parmi le premier courant et le deuxième courant permet de détecter un changement de direction imminent du balai d'essuie-glace 10 et d'adapter en conséquence l'arrosage grâce à l'électrovanne.

En variante, lorsqu'un film piézo-électrique 2 est agencé sur l'une des faces latérales 116, 117 de la lame d'essuyage 11, il est possible de se servir du courant électrique produit par le film piézo-électrique 2 pour détecter un changement de direction du balai d'essuie-glace 10.

Par exemple, si le film piézo-électrique 2 est agencé sur la première face latérale 116, alors la compression, ici sensiblement selon une direction orthogonale à la direction principale d'extension longitudinale de la lame d'essuyage 11, du film piézo-électrique 2 permet de détecter que le balai d'essuie glace 10 a quitté la position P1 et se déplace selon un sens ascendant. Inversement, l'étirement, ici sensiblement selon une direction orthogonale à la direction principale d'extension longitudinale de la lame d'essuyage 11, du film piézo-électrique 2 agencé sur la première face latérale 116 permet de détecter que le balai d'essuie glace 10 a quitté la position P2 et se déplace selon un sens descendant.

En variante, comme illustré aux figures 4 et 5, si le film piézo-électrique 2 est agencé sur la deuxième face latérale 117, alors la compression, ici sensiblement selon une direction orthogonale à la direction principale d'extension longitudinale de la lame d'essuyage 11, du film piézo-électrique 2 permet de détecter que le balai d'essuie glace 10 a quitté la position P2 et se déplace selon un sens descendant. Inversement, l'étirement, ici sensiblement selon une direction orthogonale à la direction principale d'extension longitudinale de la lame d'essuyage 11, du film piézo-électrique 2 permet de détecter que le balai d'essuie glace 10 a quitté la position P1 et se déplace selon un sens ascendant.

Ici, l'électrovanne est connectée au film piézo-électrique 2. Elle est configurée de manière à autoriser le premier arrosage lorsque le film piézo-électrique 2 génère le premier courant. Elle est de plus conçue de manière à autoriser le deuxième arrosage lorsque le film piézo-électrique 2 génère le second courant.

En particulier ici, le premier arrosage correspond à un arrosage dans le sens ascendant tandis que le deuxième arrosage correspond à un arrosage dans le sens descendant.

Le procédé d'arrosage permet l'utilisation d'une pompe unique notamment avec un seul tuyau entre un réservoir du liquide à distribuer et le balai d'essuie-glace 10. En outre, le procédé d'arrosage permet de s'affranchir d'une liaison entre le moteur du dispositif d'essuyage 1 et la pompe.

### MODULE DE COMPTAGE ET PROCEDE D'AVERTISSEMENT

Comme illustré notamment à la figure 1c, le dispositif d'essuyage 1 comprend en outre un module de comptage 9, ainsi qu'un avertisseur sonore et/ou lumineux, non illustrés.

Le module de comptage 9 est ici monté directement sur le balai d'essuie-glace 10. De même, l'avertisseur est monté directement sur le balai d'essuie-glace 10. Le module de comptage 9 et l'avertisseur sont connectés l'un à l'autre. Ils sont tous les deux conçus pour être alimentés en énergie électrique par le film piézo-électrique 2.

Le module de comptage 9 est conçu pour analyser ou mesurer le courant créé par le film piézo-électrique 2 de manière à compter le nombre d'aller-retour réalisés par le balai d'essuie-glace 10. En particulier, ici, le module de comptage 9 est conçu pour incrémenter de 1 une valeur n à chaque aller-retour du balai d'essuie-glace 10. La valeur n correspond ainsi en temps réel au nombre d'aller-retour réalisés par le balai d'essuie-glace 10.

En particulier, le module de comptage 9 peut être configuré de manière à incrémenter n à chaque fois que le film piézo-électrique 2 produit l'un parmi le premier courant électrique et le deuxième courant électrique.

On définit ici une valeur seuil prédéterminée m correspondant à un nombre d'aller-retour du balai d'essuie-glace 10 à partir duquel on estime qu'il est nécessaire de changer ou d'entretenir tout ou partie du dispositif d'essuyage 1. On peut, à titre indicatif, purement illustratif et selon la résistance des éléments du dispositif d'essuyage 10, choisir m = 100 000 ou m = 250 000 ou encore m = 500 000.

Comme illustré à la figure 6, le module de comptage 9 est conçu de manière à ce que lorsque n=m alors le module de comptage 9 active l'avertisseur. L'activation de l'avertisseur permet d'avertir un utilisateur du véhicule automobile qu'il est nécessaire de contrôler l'état du dispositif d'essuyage 1 voire de remplacer tout ou partie de celui-ci.

En variante, l'avertisseur sonore et/ou lumineux est agencé dans l'habitacle du véhicule automobile. Sur le balai d'essuie-glace 10, l'avertisseur sonore et/ou lumineux est remplacé par un émetteur-récepteur connecté au module de comptage 9. L'émetteur-récepteur est alors conçu pour activer à distance l'avertisseur sonore et/ou lumineux lorsque n=m.

L'invention concerne encore un procédé d'avertissement pour un dispositif d'essuyage 1 tel que décrit ci-dessus. Le procédé d'avertissement est conçu pour alerter un utilisateur du véhicule automobile de la possible usure d'un ou de plusieurs éléments du dispositif d'essuyage 1. Le procédé d'avertissement comprend à cet effet les étapes successives suivantes :
- analyse du courant électrique produit par le film piézo-électrique 2,
- comptage du nombre d'aller-retour du balai d'essuie-glace 10,
- création d'un signal d'avertissement lorsque le nombre d'aller-retour atteint une valeur seuil.

Le procédé d'avertissement permet ainsi d'alerter l'utilisateur du véhicule qu'il est nécessaire de remplacer tout ou partie du dispositif d'essuyage 1. Le procédé d'avertissement simplifie ainsi l'entretien du dispositif d'essuyage 1. De plus, il permet un suivi précis et en temps réel de l'utilisation du balai d'essuie-glace 10.

### DEFLECTEUR AERODYNAMIQUE

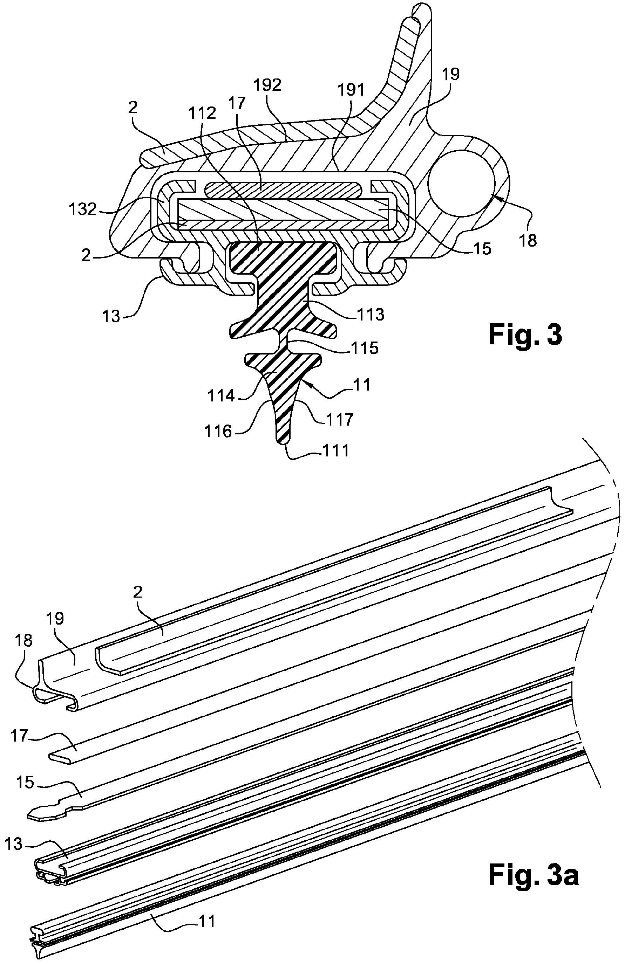

Comme illustré aux figures 2 et 3, le dispositif d'essuyage 10 peut comprendre un déflecteur aérodynamique 19. Le déflecteur aérodynamique 19 est aussi désigné par le terme anglais « spoiler ». Le déflecteur aérodynamique 19 s'étend ici longitudinalement le long et autour de l'armature 13 du balai d'essuie-glace 10.

Le déflecteur aérodynamique 19 est conçu pour maintenir le balai d'essuie-glace 10 contre la surface extérieure de la vitre 30 notamment lors du déplacement à grande vitesse du véhicule automobile. En particulier, le déflecteur aérodynamique 19 est conçu pour maintenir le balai d'essuie-glace 10 plaqué contre la surface extérieure de la vitre 30 sous l'effet d'un flux d'air créé par le déplacement du véhicule automobile.

Le déflecteur aérodynamique 19 s'étend ici sensiblement d'une extrémité à l'autre de l'armature 13 du balai d'essuie-glace 10. Le déflecteur aérodynamique 19 est agencé au niveau d'une partie supérieure du balai d'essuie-glace 10. En particulier, le déflecteur aérodynamique 19 est ici assemblé à l'armature 13 du balai d'essuie-glace 10 de manière à recouvrir au moins une partie de l'extrémité supérieure de l'armature 13.

Le déflecteur aérodynamique 19 présente ici une face interne 191 et une face externe 192. La face interne 191 du déflecteur aérodynamique 19 est conçue, une fois le déflecteur aérodynamique 19 assemblé au balai d'essuie-glace 10, pour faire face à l'armature 13. Autrement dit, la face interne 191 du déflecteur aérodynamique 19 est orientée vers le balai d'essuie-glace 10. La face externe 192 du déflecteur aérodynamique 19 est, elle, orientée vers l'extérieur du balai d'essuie-glace 10. Elle est destinée à être en contact avec le flux d'air créé par le déplacement du véhicule automobile.

### DEFORMATION PAR LE FLUX D'AIR

Comme illustré aux figures 3 et 3a, cumulativement ou en variante, un film piézo-électrique 2 peut être agencé sur le déflecteur aérodynamique 19 du balai d'essuie-glace 10. En particulier, un film piézo-électrique 2 est ici agencé sur la face externe 192 du déflecteur aérodynamique 19. Dans ce cas, la déformation du déflecteur aérodynamique 19 lorsque celui-ci est soumis à un flux d'air entraîne la déformation du film piézo-électrique 2 et la création d'un courant électrique par le film piézo-électrique 2.

En variante, comme illustré à la figure 1b, le dispositif d'essuyage 1 comprend deux balais d'essuie-glace 10. L'un et/ou l'autre des deux balais d'essuie-glace 10 sont équipés d'un film piézo-électrique 2.

## Revendications

1. Dispositif d'essuyage (1) pour vitre (30) de véhicule automobile comprenant un balai d'essuie-glace (10) et un film piézo-électrique (2), le dispositif étant **caractérisé en ce que** le film piézo-électrique (2) est monté sur le balai d'essuie-glace (10) de manière à produire un courant électrique.

2. Dispositif d'essuyage (1) selon la revendication 1 dans lequel le balai d'essuie-glace (10) comprend une lame d'essuyage (11) conçue pour être en contact avec la vitre (30) et en épouser localement la forme, le film piézo-électrique (2) étant agencé sur le balai d'essuie-glace (10) de manière à se déformer avec la lame d'essuyage (11) et produire du courant électrique lors d'un déplacement du balai d'essuie-glace (10) sur la vitre (30).

3. Dispositif d'essuyage (1) selon l'une quelconque des revendications précédentes dans lequel le film piézo-électrique (2) est conçu pour se déformer sous l'effet des vibrations et/ou de secousses créées par le fonctionnement du véhicule.

4. Dispositif d'essuyage (1) selon l'une quelconque des revendications précédentes dans lequel le film piézo-électrique (2) est conçu pour se déformer sous l'effet d'un flux d'air circulant autour du véhicule automobile.

5. Dispositif d'essuyage (1) selon l'une quelconque des revendications précédentes comprenant en outre un dispositif d'accumulation d'énergie électrique, notamment un condensateur, un super-condensateur ou une batterie, conçu pour être alimenté en courant électrique par le film piézo-électrique (2).

6. Dispositif d'essuyage selon l'une quelconque des revendications précédentes comprenant un outre un dispositif de réglage mécanique (50) conçu pour modifier une pression de contact entre le pare-brise (30) et le balai d'essuie-glace (10) en fonction du courant électrique créé par le film piézo-électrique (2).

7. Dispositif d'essuyage (1) selon l'une quelconque des revendications précédentes comprenant un module de chauffage (17), notamment un film chauffant (17), conçu pour être alimenté en courant électrique par le film piézo-électrique (2).

8. Procédé d'avertissement pour un dispositif d'essuyage (1) selon l'une quelconque des revendications précédentes comprenant les étapes suivantes :
- analyse du courant électrique produit par le film piézo-électrique (2),
- comptage du nombre d'aller-retour du balai d'essuie-glace (10),
- création d'un signal d'avertissement, notamment sonore et/ou lumineux, lorsque le nombre d'aller-retour atteint une valeur seuil.

9. Procédé de contrôle d'arrosage pour un dispositif d'essuyage (1) selon l'une quelconque des revendications 1 à 7, le dispositif d'essuyage (1) comprenant en outre un module d'arrosage conçu pour permettre alternativement et/ou cumulativement un premier mode d'arrosage de la vitre (30) et un deuxième mode d'arrosage de la vitre (30), le procédé comprenant les étapes suivantes :
- analyse du courant électrique produit par le film piézo-électrique (2),
- détection d'un changement de direction du balai d'essuie-glace (10),
- déclenchement et/ou arrêt de l'un au moins des premier et deuxième modes d'arrosage.

10. Procédé de contrôle d'arrosage selon la revendication précédente dans lequel le module d'arrosage est une électrovanne à deux voies montée sur le balai d'essuie-glace (10).

## Patentansprüche

1. Wischvorrichtung (1) für eine Fensterscheibe (30) eines Kraftfahrzeugs, welche ein Scheibenwischerblatt (10) und eine piezoelektrische Folie (2) umfasst, wobei die Vorrichtung **dadurch gekennzeichnet ist, dass** die piezoelektrische Folie (2) auf dem Scheibenwischerblatt (10) so angebracht ist, dass sie einen elektrischen Strom erzeugt.

2. Wischvorrichtung (1) nach Anspruch 1, wobei das Scheibenwischerblatt (10) einen Wischergummi (11) umfasst, der dafür ausgelegt ist, sich mit der Fensterscheibe (30) in Kontakt zu befinden und sich lokal an deren Form anzupassen, wobei die piezoelektrische Folie (2) so auf dem Scheibenwischerblatt (10) angeordnet ist, dass sie sich mit dem Wischergummi (11) verformt und bei einer Bewegung des Scheibenwischerblattes (10) auf der Fensterscheibe (30) elektrischen Strom erzeugt.

3. Wischvorrichtung (1) nach einem der vorhergehenden Ansprüche, wobei die piezoelektrische Folie (2) dafür ausgelegt ist, sich unter der Wirkung der Schwingungen und/oder von Rüttelbewegungen, die durch den Betrieb des Fahrzeugs erzeugt werden, zu verformen.

4. Wischvorrichtung (1) nach einem der vorhergehenden Ansprüche, wobei die piezoelektrische Folie (2) dafür ausgelegt ist, sich unter der Wirkung eines Luftstroms, der das Kraftfahrzeug umfließt, zu verformen.

5. Wischvorrichtung (1) nach einem der vorhergehenden Ansprüche, welche außerdem eine Vorrichtung zur Speicherung elektrischer Energie, insbesondere einen Kondensator, einen Superkondensator oder eine Batterie, umfasst, die dafür ausgelegt ist, von der piezoelektrischen Folie (2) mit elektrischem Strom versorgt zu werden.

6. Wischvorrichtung nach einem der vorhergehenden Ansprüche, welche außerdem eine mechanische Einstellvorrichtung (50) umfasst, die dafür ausgelegt ist, einen Kontaktdruck zwischen der Windschutzscheibe (30) und dem Scheibenwischerblatt (10) in Abhängigkeit von dem elektrischen Strom, der von der piezoelektrischen Folie (2) erzeugt wird, zu ändern.

7. Wischvorrichtung (1) nach einem der vorhergehenden Ansprüche, welche ein Heizmodul (17), insbesondere eine Heizfolie (17), umfasst, die dafür ausgelegt ist, von der piezoelektrischen Folie (2) mit elektrischem Strom versorgt zu werden.

8. Warnverfahren für eine Wischvorrichtung (1) nach einem der vorhergehenden Ansprüche, welches die folgenden Schritte umfasst:
- Analyse des elektrischen Stroms, der von der piezoelektrischen Folie (2) erzeugt wird,
- Zählen der Hin- und Herbewegungen des Scheibenwischerblattes (10),
- Erzeugung eines, insbesondere akustischen und/oder optischen, Warnsignals, wenn die Anzahl der Hin- und Herbewegungen einen Schwellenwert erreicht.

9. Verfahren zur Steuerung des Sprühens für eine Wischvorrichtung (1) nach einem der Ansprüche 1 bis 7, wobei die Wischvorrichtung (1) außerdem ein Sprühmodul umfasst, das dafür ausgelegt ist, alternativ und/oder kumulativ einen ersten Modus des Besprühens der Fensterscheibe (30) und einen zweiten Modus des Besprühens der Fensterscheibe (30) zu ermöglichen, wobei das Verfahren die folgenden Schritte umfasst:
- Analyse des elektrischen Stroms, der von der piezoelektrischen Folie (2) erzeugt wird,
- Erkennung einer Richtungsänderung des Scheibenwischerblattes (10),
- Auslösen und/oder Stoppen wenigstens eines von dem ersten und dem zweiten Modus des Besprühens.

10. Verfahren zur Steuerung des Sprühens nach dem vorhergehenden Anspruch, wobei das Sprühmodul ein Zweiwege-Magnetventil ist, das am Scheibenwischerblatt (10) angebracht ist.

## Claims

1. A wiping device (1) for a motor vehicle glass (30), comprising a windscreen wiper frame (10) and a piezoelectric film (2), the device being **characterized in that** the piezoelectric film (2) is mounted on the windscreen wiper frame (10) such as to produce an electric current.

2. The wiping device (1) as claimed in claim 1, in which the windscreen wiper frame (10) has a wiper rubber (11) designed to be in contact with the glass (30) and to locally fit the shape thereof, the piezoelectric film (2) being arranged on the windscreen wiper frame (10) such as to be deformed with the wiper rubber (11) and to generate the electric current when the windscreen wiper frame (10) moves on the glass (30).

3. The wiping device (1) as claimed in any one of the preceding claims, in which the piezoelectric film (2) is designed to be deformed under the effect of the vibrations and/or shocks created by operation of the vehicle.

4. The wiping device (1) as claimed in any one of the preceding claims, in which the piezoelectric film (2) is designed to be deformed under the effect of an air flow about the motor vehicle.

5. The wiping device (1) as claimed in any one of the preceding claims, also including an electrical energy accumulation device, notably a capacitor, a super-capacitor or a battery, that is designed to be supplied with electric current by the piezoelectric film (2).

6. The wiping device as claimed in any one of the preceding claims, also including a mechanical adjustment device (50) that is designed to modify a contact pressure between the glass (30) and the windscreen wiper frame (10) as a function of the electric current created by the piezoelectric film (2).

7. The wiping device (1) as claimed in any one of the preceding claims, including a heating module (17), notably a heating film (17), that is designed to be supplied with electric current by the piezoelectric film (2) .

8. A warning method for a wiping device (1) as claimed in any one of the preceding claims, including the following steps:
- analysis of the electric current generated by the piezoelectric film (2),
- counting the number of to-and-fro movements of the windscreen wiper frame (10),
- creating a warning signal, notably an audible and/or luminous signal, when the number of to-and-fro movements reaches a threshold value.

9. A spray control method for such a wiping device (1), as claimed in any one of claims 1 to 7, the wiping device (1) also including a spray module that is designed to enable, alternately and/or cumulatively, a first spray mode of the glass (30) and a second spray mode of the glass (30), the method comprising the following steps:
- analysis of the electric current generated by the piezoelectric film (2),
- detection of a change of direction of the windscreen wiper frame (10),
- triggering and/or stoppage of at least one of the first and second spray modes.

10. Spray control method as claimed in the preceding claim, in which the spray module is a two-way solenoid valve mounted on the windscreen wiper frame (10).
